# EUROPÄISCHE PATENTSCHRIFT

(11) **EP 2 193 725 B1**
(45) Veröffentlichungstag und Bekanntmachung des Hinweises auf die Patenterteilung: **04.03.2015**
(21) Anmeldenummer: 09177241.8
(22) Anmeldetag: 26.11.2009
(51) Int. Cl.: A23N 7/04, B65G 15/14

(54) **Transporteinheit und Schälvorrichtung für langgestrecktes Schälgut**
Transport unit and peeling device for elongated peeled goods
Unité de transport et dispositif d'épluchage pour produit à éplucher étendu en longueur

(30) Priorität: 02.12.2008 DE 102008059911
(43) Veröffentlichungstag der Anmeldung: 09.06.2010
(73) Patentinhaber: Hepro GmbH, 33378 Rheda-Wiedenbrück (DE)
(72) Erfinder: Protte, Christoph, 33129 Delbrück (DE)
(74) Vertreter: Ostermann, Thomas

(56) Entgegenhaltungen:
- EP-A1- 1 600 266
- CH-A5- 679 203
- DE-A1- 1 779 448
- DE-A1- 2 153 130
- DE-A1- 2 813 083
- DE-A1- 3 843 620
- US-A- 4 212 237

## Beschreibung

Die Erfindung betrifft eine Transporteinheit zum Transportieren von langgestrecktem Schälgut nach dem Oberbegriff des Patentanspruchs 1.

Aus der DE 10 2007 009 434 A1 ist eine Transporteinheit für die Zuführung von Spargelstangen zu einer Spargelsortiervorrichtung bekannt, die als Transportmittel fünf zueinander parallele und zueinander beabstandete Transportbänder aufweist. Die Transportbänder sind in einer gemeinsamen Ebene horizontal angeordnet und als umlaufende Endlosbänder ausgeführt. Auf den Transportbändern liegen die Spargelstangen quer zu einer Transportrichtung. Die Transportbänder werden von einem Servomotor über ein Kegelradgetriebe synchron zueinander angetrieben. Nachteilig ist hierbei, dass aufgrund der Ablage des Spargels auf den Transportbändern und der Orientierung der Spargelstangen ein vollständiges Schälen der Spargelstangen in Umfangsrichtung unter Nutzung der Transportbewegung nicht möglich ist. Zur Zuführung des quer zur Transportrichtung orientierten und in seiner Längsrichtung zu schälenden Spargels zu einer Schälvorrichtung sind die Spargelstangen so zu drehen, dass sie längs zur Transportrichtung orientiert sind. Darüber hinaus ist der Spargel beim Schälen anzuheben und/oder zu drehen. Dies ist mit der Transporteinheit nur durch zusätzliche technische Maßnahmen zu erreichen.

Aus der DE 100 48 773 B1 ist eine Schälvorrichtung mit beiner Schneideinheit zum Schälen eines langgestreckten Schälguts und mit einer Transporteinheit zum Bewegen des langgestreckten Schälguts in eine Transportrichtung bekannt. Die Transportrichtung ist hierbei senkrecht zur Längserstreckung des langgestreckten Schälguts orientiert. Eine Aufnahmeeinheit zur Halterung des langgestreckten Schälguts an der Transporteinheit ist derart mit der Transporteinheit gekoppelt, dass das an einem Ende in der Aufnahmeeinheit hängend gehaltene langgestreckte Schälgut von der Transporteinheit in eine Mehrzahl von Schälpositionen bewegbar ist. In jeder dieser Schälpositionen wird das langgestreckte Schälgut durch eine senkrecht zur Transportrichtung und in Längsrichtung des langgestreckten Schälguts orientierten Hubbewegung der Schneideinheit jeschält. Die den einzelnen Schälpositionen zugeordneten Schneideinheiten sind hierbei um die Längsrichtung des langgestreckte Schälguts winkelversetzt angeordnet. Der winkelversatz der Schneideinheiten und die Anzahl an Schälpositionen sind so gewählt, dass das langgestreckte Schälgut nach Durchlaufen aller Schälpositionen vollumfänglich geschält ist. Nachteilig ist hierbei, dass das langgestreckte Schälgut in einem nicht kontinuierlichen Prozess mit diskreten Transportarbeitsschritten und ebenso diskreten Schneidarbeitsschritten bearbeitet wird. Hierdurch ist der Durchsatz der Schälvorrichtung und damit ihre Wirtschaftlichkeit begrenzt. Ferner ist die Schälvorrichtung aufgrund der linearen Hubbewegung, die die Schneideinheit ausführt, in ihrer Anwendung limitiert auf langgestrecktes, gerades und einen im Wesentlichen konstanten Durchmesser aufweisendes langgestrecktes Schälgut, beispielsweise Spargelstangen. Gebogenes langgestrecktes Schälgut bzw. langgestrecktes Schälgut mit einem in dessen Längsrichtung variablen Durchmesser, beispielsweise Gurken, können mit der Schälvorrichtung unabhängig von der Anzahl der vorgesehenen Schälpositionen nicht bzw. nur unvollständig geschält werden.

Aus der DE 17 79 448 A1 ist eine Schälvorrichtung für Spargel mit einer Mehrzahl von Schälmodulen und Transporteinheiten bekannt. Schälmodule und Transporteinheiten sind hierbei alternierend hintereinander in Reihe angeordnet. Eine Transporteinheit weist insgesamt vier Transportmittel auf, welche jeweils in die Transportrichtung erstreckt sind. Den Transportmitteln zugeordnete Transportbänder sind elastisch ausgebildet und derart profiliert, dass sich eine kreisförmige Förderrinne bildet. Jedes Förderband definiert hierbei einen Kreissegmentabschnitt von 90°. Eine Anpassung des Querschnitts der Förderrinne ist durch die Elastizität der Förderbänder möglich mit der Folge, dass Spargel unterschiedlicher Dicke transportiert werden kann. Dickeres Schälgut bzw. gebogenes Schälgut kann jedoch nicht transportiert werden. Ebenfalls sind die Schälmodule nicht zum Schälen von gebogenem Schälgut ausgebildet.

Aus der EP 0 160 266 A1 ist eine Transporteinheit mit vier Transportmitteln bekannt, welche zum Transport von Gurken oder dergleichen dient. Zwei der Transportmittel bilden eine V-förmige Förderrinne, entlang derer das Schälgut geführt wird. Die Förderrinne steigt in Transportrichtung an und verjüngt sich. Das in der Rinne geführte Schälgut gelangt am in Transportrichtung gesehen vorderen Ende der Transporteinheit mit zwei weiteren Transportmitteln in Wirkeingriff, woei die zwei Transportmittel der Förderrinne von oben zugeordnet sind. Alle vier Transportmittel sind nachgiebig zueinander angeordnet und beweglich gelagert. Während des Transports des Schälguts verschiebt sich die Lage der Transportmittel in Abhängigkeit vom Durchmesser und Wuchs des Schälguts.

Aus der US 4 212 237 A ist eine Schälvorrichtung für Spargel bekannt, bei der Spargel einem Schälmodul entlang einer durch zwei V-förmig zueinander angestellte Transportmittel gebildeten Förderrinne zugeführt wird. In der Förderrinne liegt der Spargel frei, das heißt er ist nicht gegen die Transportmittel gepresst. Die Vorrichtung eignet sich daher nicht für gebogenes Schälgut bzw. Schälguts mit starken Durchmesserschwankungen.

Aus der CH 679 203 A5 ist eine Transporteinheit beispielsweise für Gurken, Karotten oder Spargel bekannt. Mittels der Transporteinheit wird das Schälgut einer Schneidvorrichtung zugeführt. Insgesamt sind drei Transportmittel vorgesehen, wobei ein Transportmittel nach Art eines Niederhalters angeordnet ist und eine durch die beiden anderen Transportmittel gebildete, V-förmige Förderrinne zugeordnet ist. Alle Transportmittel sind unter einem Winkel zur Transportrichtung des Schälguts angeordnet mit der Folge, dass die V-förmige Rinne sich in Transportrichtung verjüngt. Zudem sind alle Transportmittels schwimmend angeordnet. Das Schälgut wird nicht während der gesamten Transportstrecke in der Rinne geführt, sondern lediglich kurz vor der Übergabe an die nachfolgend Schneidvorrichtung mittels der Transportmittel zentriert und gefördert.

Aufgabe der vorliegenden Erfindung ist es daher, eine Transporteinheit und eine Schälvorrichtung derart weiterzubilden, dass ein kontinuierliches Transportieren und Schälen beliebig geformter, langgestreckter Schälgut möglich ist.

zur Lösung dieser Aufgabe weist die Erfindung die Merkmale des Patentanspruchs 1 auf.

Der besondere Vorteil der Erfindung besteht darin, dass das langgestreckte Schälgut in der durch die V-förmig zueinander angestellt orientierten Transportmittel gebildeten Förderrinne mittig zwischen den Transportbändern, das heißt in einer horizontal exakt bestimmten Position angeordnet ist. Zudem wird das langgestreckte Schälgut gegen ein seitliches Herausfallen geschützt und sicher gehalten. Indem der Förderrinne zusätzlich ein Niederhalter zugeordnet ist, wird die Positionssicherheit des langgestreckten Schälguts während des Transports in der Transporteinheit in der Förderrinne weiter verbessert. Die Gefahr eines Verkantens des langgestreckten Schälguts während des Transports ist somit gering. Hierdurch steigt die Funktionssicherheit und damit die Wirtschaftlichkeit der Transporteinheit. Ferner vereinfacht die durch die V-förmig Anstellung der Transportmittel bewirkte zentrierte Lage des langgestreckten Schälguts die Handhabung desselben insbesondere bei der Übergabe an eine nachgelagerte Arbeitsstation, zum Beispiel eine Schäl- oder Sortierstation.

Nach der Erfindung ist der Niederhalter über einen Schwenkarm schwimmend in Bezug auf die V-förmig zueinander angestellten Transportmittel gelagert. Ein erster Endabschnitt des Schwenkarms ist hierbei um eine senkrecht zu der Transportrichtung des langgestreckten Schälguts orientierte horizontale erste Drehachse schwenkbar mit dem Niederhalter verbunden. Ein zweiter Endabschnitt des Schwenkarms ist um eine zu der ersten Drehachse parallele zweite Drehachse schwenkbar mit einem ortsfesten Träger verbunden. Durch die so bewirkte schwimmende Lagerung des Niederhalters in Bezug auf die die Förderrinne bildenden Transportmittel kann der Niederhalter das langgestreckte Schälgut unabhängig von dessen Durchmesser förderbar in der Förderrinne halten. Durchmesserschwankungen können hierbei von einem langgestreckten Schälgut zum anderen auftreten. Ebenso kann ein einziges langgestrecktes Schälgut in seiner Erstreckungsrichtung unterschiedliche Durchmesser aufweisen. Ferner kann das langgestreckten Schälgut bogenförmig gewachsen sein. Eine in der Höhe variable Lagerung des Niederhalters ist in der Lage, durch die Wuchsform bedingte geometrische varianzen des langgestreckten Schälguts auszugleichen. Hinzu kommt, dass beim Eintritt des langgestreckten Schälguts in die Förderrinne oder beim Verlassen derselben nur ein vorderer oder hinterer Endabschnitt des langgestreckten Schälguts von dem Niederhalter erfasst ist. Aufgrund der schwimmenden Lagerung des Niederhalters ist auch in diesem Fall ein sicherer Transport des langgestreckten Schälguts gewährleistet.

Nach der Erfindung ist wenigstens ein Transportmittel als ein endloses, umlaufendes Transportband ausgebildet. Ferner weist die Antriebseinheit einen Motor zum Antrieb eines ersten Transportmittels der V-förmig zueinander angestellten Transportmittel und/oder einen Motor zum Antrieb eines zweiten Transportmittels der V-förmig zueinander angestellten Transportmittel und/oder ein Motor zum Antrieb eines Transportmittels des Niederhalters auf. Das Vorsehen eines angetriebenen Transportbandes stellt eine in der Praxis wohlbekannte, ausgereifte und zuverlässige Transportlösung dar, die besonders kostengünstig realisiert werden kann. Derartige Transportbänder werden unter rauen Produktionsrandbedingungen ebenso eingesetzt wie beim Transport und der Verarbeitung von Lebensmitteln, die insbesondere hinsichtlich der Hygienevorschriften besondere Vorkehrungen verlangen.

Nach einer bevorzugten Ausführungsform der Erfindung schließen die V-förmig zueinander angestellten Transportmittel einen Anstellwinkel in einem Winkelbereich von 40° bis 160° ein. In diesem Winkelbereich ist ein guter Kompromiss gegeben zwischen der Sicherung des langgestreckten Schälguts gegen ein seitliches Herausgleiten aus der Förderrinne einerseits und einer hinreichenden Flexibilität bzw. Größentoleranz in Bezug auf den Durchmesser und die Krümmung des zu transportierenden langgestreckten Schälguts andererseits. Bei einem zu großen Öffnungswinkel ist insbesondere die seitliche Führung des langgestreckten Schälguts nur noch unzureichend gesichert. Bei einem zu geringen Anstellwinkel der V-förmig zueinander angeordneten Transportmittel steigen die zwischen dem langgestreckten Schälgut und dem Transportmittel wirkenden Klemmkräfte, so dass die Gefahr einer Beschädigung des langgestreckten Schälguts beim Transport zunimmt.

Nach einer Weiterbildung der Erfindung sind die V-förmig zueinander angestellten Transportmittel derart beabstandet zueinander angeordnet, dass die Förderrinne in einem Rinnengrund einen sich in die Transportrichtung erstreckenden Schlitz aufweist. Durch das Vorsehen eines Schlitzes können Feuchtigkeit, Fremd- und Reststoffe, die zunächst an dem langgestreckten Schälgut anhaften und beim Transport von diesem abfallen, aus der Förderrinne entweichen. Dies ist besonders vorteilhaft, wenn die Transporteinheit dem Abtransport des langgestreckten Schälguts von einer Reinigungs- und/oder Schäleinheit dient. In diesem Fall können Schalen, Erdreste oder gegebenenfalls mitgeerntetes Blattgrün unter Einwirken der Schwerkraft von dem langgestreckten Schälgut getrennt werden. Gleichzeitig ist zu berücksichtigen, dass durch das Schälen insbesondere an der Schnittfläche Feuchtigkeit aus dem langgestreckten Schälgut austreten kann, die - sofern sie nicht abgeführt wird - die Förderfähigkeit des langgestreckten Schälguts beeinträchtigen kann.

Nach einer Weiterbildung der Erfindung ist der Niederhalter durch sein Eigengewicht und/oder durch eine Anpresskraft gegen das langgestreckte Schälgut angepresst. Die Anpressung des Niederhalter durch sein Eigengewicht erlaubt hierbei eine besonders einfache und kostengünstige Konstruktion desselben. Das Vorsehen eines Anpressmittels, beispielsweise einer Feder, eines Druckzylinder oder dergleichen, erlaubt eine Variation des Anpressdrucks, so dass abhängig von dem zu transportierenden langgestreckten Schälgut eine Justage des Anpressdrucks erfolgen kann. Sie kann zu einer Verbesserung der Förderfähigkeit und zu einer höheren Betriebssicherheit führen. Eine Reduzierung von Stillstands- bzw. Ausfallzeiten verbessert hierbei den Durchsatz durch die Transporteinheit und deren Wirtschaftlichkeit.

Weitere Vorteile der Erfindung ergeben sich aus den weiteren Unteransprüchen.

Ausführungsbeispiele der Erfindung werden nachfolgend anhand der Zeichnungen näher erläutert.

Es zeigen:
- Figur 1: eine Seitenansicht einer Transporteinheit,
- Figur 2: eine Sicht auf die Transporteinheit gemäß Figur 1 in eine Transportrichtung,
- Figur 3a: eine Seitenansicht der Transporteinheit gemäß Figur 1 mit einem in die Transporteinheit einlaufenden langgestreckten Schälgut,
- Figur 3b: eine Seitenansicht der Transporteinheit gemäß Figur 1 mit dem darin gehaltenen langgestreckten Schälgut,
- Figur 3c: eine Seitenansicht der Transporteinheit gemäß Figur 1 mit dem die Transporteinrichtung verlassenden langgestreckten Schälgut,
- Figur 4a: eine perspektivische Ansicht einer eine Mehrzahl von Transporteinheiten gemäß Figur 1 aufweisende Schälvorrichtung,
- Figur 4b: eine Seitenansicht der Schälvorrichtung gemäß Figur 4a,
- Figur 5: eine perspektivische Ansicht einer Anspitzvorrichtung und
- Figur 6: eine perspektivische Darstellung einer Teilungsvorrichtung, der die aus Gründen der Klarheit ohne einen Niederhalter dargestellte Transporteinheit gemäß Figur 1 zugeordnet ist.

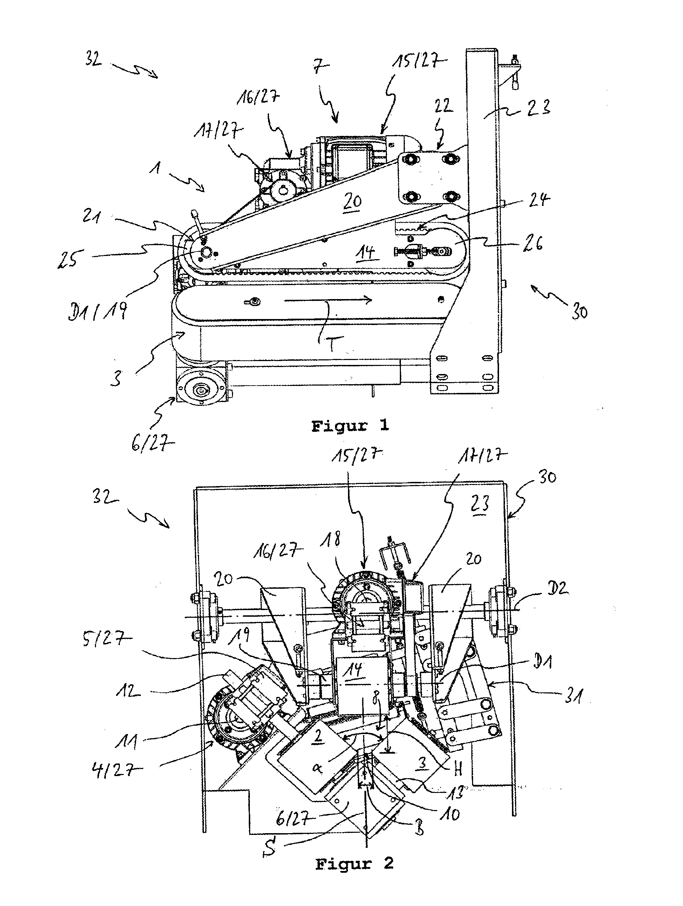

Eine Transporteinheit 1 zum Transportieren von langgestrecktem Schälgut 9 (Gurken, Möhren, Kürbis, Maniok, Zucchini, Rettich, Casavas etc.) gemäß der Figuren 1 und 2 besteht im Wesentlichen aus einem ersten Transportmittel 2, einem zweiten Transportmittel 3, einem Elektromotor 4, einem ersten Winkelgetriebe 5, einem zweiten Winkelgetriebe 6 und einem Niederhalter 7. Die Transporteinheit 1 ist typischerweise Bestandteil einer Vorrichtung zur industriellen Verarbeitung des Schälguts 9. Sie dient beispielsweise dazu, das langgestreckte Schälgut 9 einer Verarbeitungsstation (Sortierstation, Schälstation, Putzstation) zuzuführen bzw. es von dieser abzutransportieren.

Das erste Transportmittel 2 und das zweite Transportmittel 3 erstrecken sich in eine Transportrichtung T und weisen jeweils ein endloses, umlaufendes Transportband auf. Die beiden Transportmittel 2, 3 sind im Querschnitt V-förmig zueinander angestellt orientiert und bilden mit dem dem Niederhalter 7 zugewandten Abschnitt des umlaufenden Förderbandes eine nach oben offene Förderrinne 8 zum Transport von langgestrecktem Schälgut 9. Die Förderrinne 8 erstreckt sich in die Transportrichtung T und dient zur Führung des langgestreckten Schälguts 9 in die vorgegebene Transportrichtung T.

Die V-förmig zueinander angestellten Transportmittel 2, 3 schließen einen Anstellwinkel α von 90° ein. In einer horizontalen Richtung sind das erste Transportmittel 2 und das zweite Transportmittel 3 seitlich derart beabstandet zueinander angeordnet, dass sich in einem Rinnengrund der Förderrinne 8 ein Schlitz 10 bildet. Der Schlitz 10 erstreckt sich hierbei in die Transportrichtung T. Seine Breite B ist so dimensioniert, dass zum einen sichergestellt ist, dass das langgestreckte Schälgut 9 nicht durch den Schlitz 10 nach unten aus der Förderrinne 8 herausfallen kann. Zum anderen ist die Breite B so bemessen, dass an dem langgestreckten Schälgut 9 anhaftende Reststoffe, z. B. Schalen, Blattgrün oder Erde, während des Transports von dem langgestreckten Schälgut 9 abfallen und durch den Schlitz 10 nach unten abgeführt werden können. Die Förderrinne 8 weist hierbei eine durch den Schlitz 10 laufende, sich in vertikaler Richtung erstreckende und die Transportrichtung T aufnehmende Symmetrieebene S auf.

Der Elektromotor 4 ist seitlich beabstandet zu dem ersten Transportmittel 2 angeordnet. Seine Antriebsachse 11 erstreckt sich in Transportrichtung T. Über das zwischen dem Elektromotor 4 und dem ersten Transportmittel 2 angeordnete erste Winkelgetriebe 5 wird die Antriebsbewegung von der Antriebsachse 11 des Elektromotors 4 auf eine Antriebsachse 12 des ersten Transportmittels 2 übertragen. Die Antriebsachse 11 des Elektromotors 4 und die Antriebsachse 12 des ersten Transportmittels 2 schließen hierbei einen Winkel von 90° zueinander ein.

In der Verlängerung der Antriebsachse 11 des ersten Transportmittels 2 ist zwischen diesem und dem zweiten Transportmittel 3 das zweite Winkelgetriebe 6 angeordnet. Über das zweite Winkelgetriebe 6 wird die Antriebsbewegung des Elektromotors 4 von der Antriebsachse 12 des ersten Transportmittels 2 synchron auf eine Antriebsachse 13 des zweiten Transportmittels 3 übertragen. Die Antriebsachse 13 des zweiten Transportmittels 3 steht hierbei senkrecht sowohl zur Antriebsachse 11 des Elektromotors 4 als auch zur Antriebsachse 12 des ersten Transportmittels 2.

Der Niederhalter 7 ist im Bereich einer Oberseite der Transporteinheit 1 angeordnet. Der Förderrinne 8 ist der Niederhalter 7 auf einer dem Schlitz 10 gegenüberliegenden Oberseite zugeordnet. Der Niederhalter 7 ist hierbei in vertikaler Richtung oberhalb des Schlitzes 10 und beabstandet zu den die Förderrinne 8 bildenden Transportmitteln 2, 3 angeordnet. Er umfasst ein Transportmittel 14, einen Elektromotor 15, ein Winkelgetriebe 16 sowie ein Zahnriemengetriebe 17. Das Transportmittel 14 des Niederhalters 7 erstreckt sich in Transportrichtung T des langgestreckten Schälguts 9 und weist - analog zum ersten Transportmittel 2 und zum zweiten Transportmittel 3 - ein endloses, umlaufendes Transportband auf.

Zwischen einem Untertrum des Transportmittels 14 und dem Schlitz 10 ist eine Rinnenhöhe H gebildet. Die Rinnenhöhe H kann wahlweise so bemessen sein, dass eine Quererstreckung des langgestreckten Schälguts 9 größer ist als die Rinnenhöhe H. Wird das langgestreckte Schälgut 9 von dem Niederhalter 7 förderbar in der Förderrinne 8 gehalten, ist der Niederhalter 7 gegenüber einer Ruhelage gemäß Figur 2 in vertikaler Richtung nach oben angehoben. Das langgestreckte Schälgut 9 wird mit der vollständigen Gewichtskraft des Niederhalters 7 gegen die Oberfläche der V-förmig zueinander angestellten Transportmittel 2, 3 gedrückt. Darüber hinaus kann ein zusätzliches, an dem Niederhalter 7 angebrachtes Anpressmittel, beispielsweise eine Feder oder ein Pneumatikzylinder, eine zusätzliche Anpresskraft auf das langgestreckte Schälgut 9 aufbringen.

Das langgestreckte Schälgut 9 liegt in der Förderrinne 8 an dem ersten Transportmittel 2 und an dem zweiten Transportmittel 3 sowie an dem Transportmittel 14 des Niederhalters 7 an. Die Anlage variiert hierbei abhängig vom Schälzustand des langgestreckten Schälguts 9. Eine linienförmige Anlage wird sich insbesondere für das ungeschälte Schälgut 9 und eine flächige Anlage für das zumindest teilweise geschälte Schälgut 9 ergeben.

Alternativ kann die Rinnenhöhe H der mittleren Quererstreckung des langgestreckten Schälguts 9 entsprechen. Das langgestreckte Schälgut 9 wird in diesem Fall mit einer im Mittel geringeren Anpresskraft in der Förderrinne 8 gehalten. Eine weitere Reduzierung der mittleren Anpresskraft ergibt sich, wenn die Rinnenhöhe H größer ist als die maximale Quererstreckung des langgestreckten Schälguts. In diesem Fall dient der Niederhalter 7 lediglich dazu, dass in vertikaler Richtung aus der Förderrinne 8 gehobene Schälgut 9 zurück in eine Förderposition zu verbringen.

Sofern das langgestreckte Schälgut 9 an dem ersten Transportmittel 2 und an dem zweiten Transportmittel 3 anliegt, ist der Niederhalter 7 in dieser Konfiguration außer Eingriff. Die Reduzierung der mittleren Anpresskraft ist insbesondere dann sinnvoll, wenn eine Beschädigung des langgestreckten Schälguts 9 durch zu hohe Anpresskräfte auftritt.

Der Elektromotor 15 des Niederhalters 7 dient zum Antrieb des Transportmittels 14. Eine Antriebsachse 18 des Elektromotors 15 ist in Transportrichtung T orientiert angeordnet. Das Winkelgetriebe 16 und das Zahnriemengetriebe 17 des Niederhalters 7 übertragen die Antriebsbewegung vom Elektromotor 15 auf eine Antriebsachse 19 des Transportmittels 14. Hierbei bilden der Elektromotor 4 des ersten Transportmittels 2, das ersten Winkelgetriebe 5, das zweite Winkelgetriebe 6, der Elektromotor 15 des Niederhalters 7, das Winkelgetriebe 16 des Niederhalters und das Zahnriemengetriebe 17 eine Antriebseinheit 27.

Um eine schlupffreie Übertragung dieser Antriebsbewegung zu gewährleisten, weist das Transportband des Transportmittels 14 auf einer Innenseite desselben Zähne 24 auf. Die Zähne 24 greifen in entsprechende Ausnehmungen der Antriebsachse 19 ein und ermöglichen auf diese Weise eine formschlüssige Übertragung der Bewegung des Elektromotors 15 auf das Transportband.

Der Niederhalter 7 ist über einen Schwenkarm 20 schwimmend in Bezug auf die V-förmig zueinander angeordneten Transportmittel 2, 3 gelagert. Ein erster Endabschnitt 21 des Schwenkarms 20 ist um die Antriebsachse 19 des Transportmittels 14 des Niederhalters 7 drehbar gelagert. Die Antriebsachse 19 bildet diesbezüglich eine erste Drehachse D1 des Schwenkarms 20, die horizontal und senkrecht zur Transportrichtung T orientiert ist. Ein zweiter Endabschnitt 22 des Schwenkarms 20 ist um eine zu der ersten Drehachse D1 parallele zweite Drehachse D2 an einem ortsfesten Träger 23 angelenkt. Insgesamt bewirkt die Art der Lagerung, dass der Niederhalter 7 in Bezug auf die V-förmig zueinander angestellten, die Förderrinne 8 bildenden Transportmittel 2, 3 zum einen in vertikaler Richtung parallel verschiebbar und zum anderen schwenkbar gehalten ist.

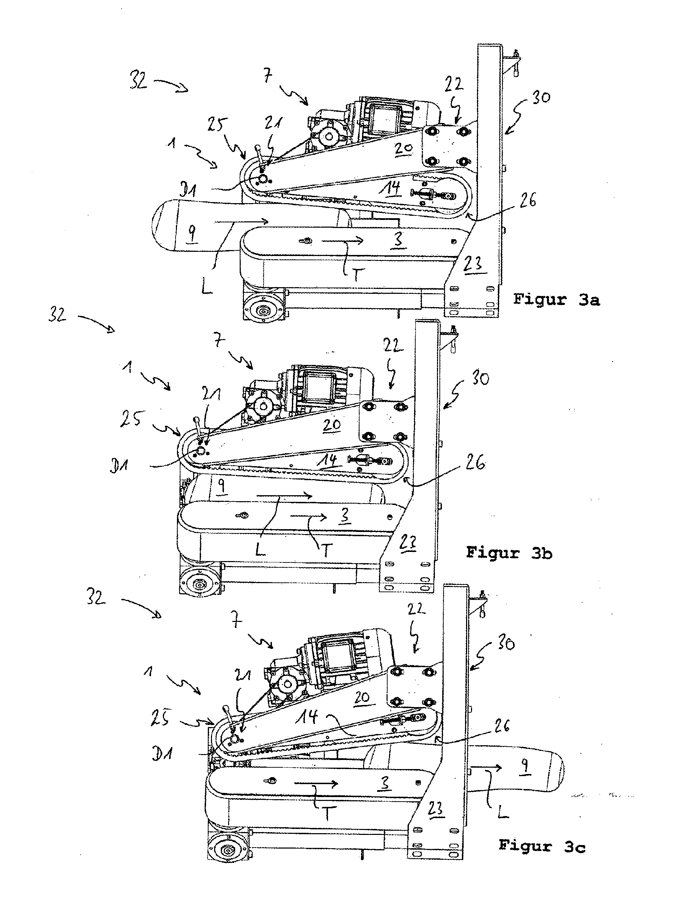

Der Niederhalter 7 ist in vertikaler Richtung derart beabstandet von dem Rinnengrund der Förderrinne 8 angeordnet, dass der Niederhalter 7 beim Eintritt des langgestreckten Schälguts 9 in die Transporteinheit 1 gemäß Figur 3a aufgrund der größeren Quererstreckung des Schälguts 9 im Vergleich zur Rinnenhöhe H mit einem in Transportrichtung T gesehen hinteren Ende 25 angehoben wird. Die Transportbänder der ersten Transporteinheit 2, der zweiten Transporteinheit 3 und der Transporteinheit 14 des Niederhalters 7 sind hierbei wirkungsgleich derart angetrieben, dass das langgestreckte Schälgut 9 durch die umlaufende Bewegung der Transportbänder in Transportrichtung T gefördert und in einer Längsrichtung L des langgestreckten Schälguts 9 in die Förderrinne 8 gezogen wird. Aufgrund der in Bezug auf die Symmetrieebene S der Förderrinne 8 gleichmäßig geneigten Transportbänder der Transportmittel 2, 3 liegt das langgestreckte Schälgut 9 - von Abweichungen aufgrund eines bogenförmigen Wuchses abgesehen - mittig in der Förderrinne 8. Hierbei liegt das langgestreckte Schälgut 9 mit dem in der Transporteinheit 1 eingezogenen Teil seiner Längskontur an dem V-förmig zueinander angestellten Transportmitteln 2, 3 und dem Transportmittel 14 des Niederhalters 7 an.

Um eine Beschädigung des langgestreckten Schälguts 9 zu vermeiden, sind die Bewegungen der umlaufenden Transportbänder der drei Fördermittel 2, 3, 14 synchronisiert. Die Synchronisation des ersten Transportmittels 2 und des zweiten Transportmittels 3 ist über den gemeinsamen Elektromotor 4 gegeben. Darüber hinaus können die Transportbänder - analog zu dem Transportband des Transportmittels 14 des Niederhalters 7 - auf ihrer Innenseite über nicht dargestellte Zähne verfügen, die in entsprechende Ausnehmungen der Antriebsachsen 12, 13 des ersten und des zweiten Transportmittels 2, 3 eingreifen und die Bewegung des Elektromotors 4 synchron auf die Transportbänder übertragen. Die Synchronisation der umlaufenden Bewegung des Transportbandes des Niederhalters 7 in Bezug auf die Transportbewegung des ersten und zweiten Transportmittels 2, 3 kann steuerungstechnisch gewährleistet werden.

Das langgestreckte Schälgut 9 wird durch die Transportmittel 2, 3, 14 derart in die Transporteinheit 1 hineingefördert, dass das langgestreckte Schälgut 9 gemäß Figur 3b in seiner gesamten Länge von dem Niederhalter 7 entlang der Förderrinne 8 förderbar gehalten ist. Das in Transportrichtung T vordere Ende 26 des Niederhalters 7 wird hierbei ebenfalls in vertikaler Richtung angehoben. Die schwimmende Lagerung des Niederhalters 7 sorgt dafür, dass das langgestreckte Schälgut 9 unabhängig von seiner Wuchsform, das heißt seinem Durchmesser und/oder seiner Krümmung, in der Förderrinne 8 gehalten ist.

Verlässt das langgestreckte Schälgut 9 gemäß Figur 3c die Transporteinheit 1, so senkt sich das hintere Ende 25 des Niederhalters 7 in die Ausgangsstellung ab. Das vordere Ende 26 hält das langgestreckte Schälgut 9 jedoch so lange in der Förderrinne 8, bis dieses die Transporteinheit 1 vollständig verlässt. Mit dem Verlassen des langgestreckten Schälguts 9 der Transporteinheit 1 in Transportrichtung T senkt sich das vordere Ende 26 des Niederhalters 7 ebenfalls in seiner Ausgangsposition ab.

Der Niederhalter 7 wird in der vorliegenden Konfiguration durch sein Eigengewicht und das Einwirken der Schwerkraft von oben gegen das langgestreckte Schälgut 9 gedrückt. Auf das Vorsehen von Anpressmitteln, beispielsweise Federn oder Pneumatikzylindern, wird in dieser Ausführungsform verzichtet.

Der Transporteinheit 1 ist in Transportrichtung T eine Schneideinheit 30 vorgelagert. Die Schneideinheit 30 weist den ortsfesten Träger 23 sowie eine an dem Träger 23 gehaltene Messereinheit 31 mit zwei schwimmend gelagerten Parallelmessern auf. Die Parallelmesser sind hierbei senkrecht zur Transportrichtung T orientiert und an das langgestreckte Schälgut 9 in Bezug auf eine Längsrichtung L desselben seitlich anlegbar.

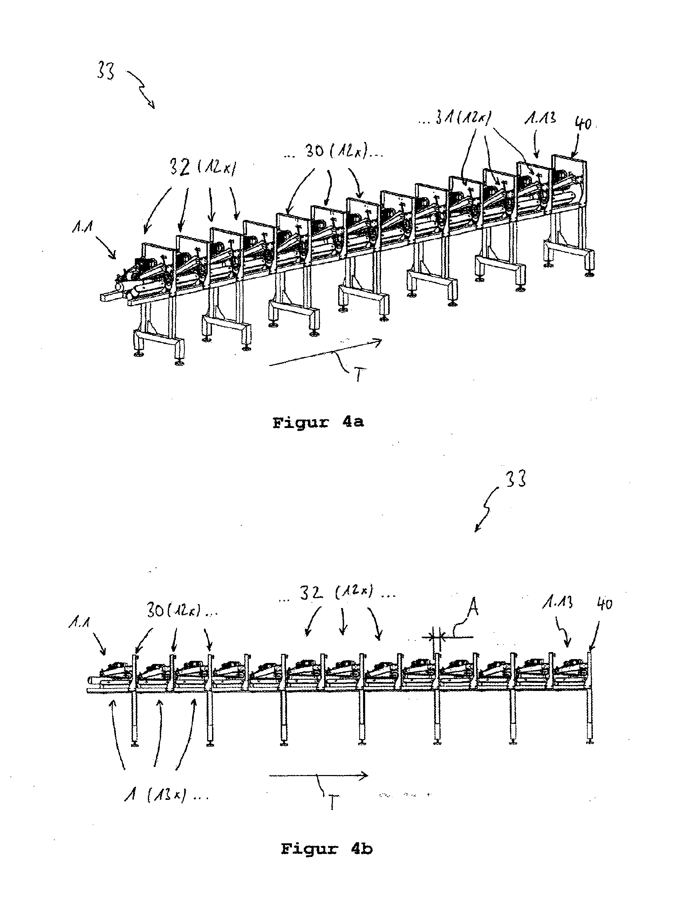

Die Transporteinheit 1 und die Schneideinheit 30 bilden zusammen ein Schälmodul 32. Eine Mehrzahl von in Transportrichtung T hintereinander angeordneten Schälmodulen 32 bilden gemeinsam eine Schälvorrichtung 33 gemäß der Figuren 4a und 4b. Eine Schälvorrichtung 33 weist demzufolge eine Mehrzahl von Schneideinheiten 30 und Transporteinheiten 1 auf, die in Transportrichtung T derart hintereinander verbaut sind, dass jeweils eine Schneideinheit 30 zwischen zwei benachbarten Transporteinheiten 1 angeordnet ist. In diese alternierende Anordnung unterscheiden sich die ansonsten baugleich ausgeführten Schneideinheiten 30 lediglich darin, dass die zu den Schneideinheiten 30 gehörenden Messereinheiten 31 um die Transportrichtung T winkelversetzt angeordnet sind. In den Figuren 4a und 4b sind die Messereinheiten 31 allein zum Zwecke der einfachen Darstellbarkeit winkelgleich und nicht winkelversetzt angeordnet.

Die Messereinheiten 31 der hintereinander angeordneten Schneideinheiten 30 sind in Umfangsrichtung zum Schälgut 9 bzw. zur Transportrichtung T derart winkelversetzt angeordnet, dass das langgestreckte Schälgut 9 nach dem Durchlaufen der Schälvorrichtung 33 voll umfänglich geschält ist. Für das Schälen von Senfgurken, die in der Abbildung exemplarisch dargestellt sind, sind hierzu zwölf Schneideinheiten 30 mit jeweils zwei Parallelmesser aufweisenden Messereinheiten 31 zueinander um 15° versetzt angeordnet. Wird die Schälvorrichtung 33 zum Schälen von Kürbis, Maniok, Zucchini, Rettich, Karotten, Casavas oder dergleichen eingesetzt, kann sie je nach Durchmesser und Krümmung des langgestreckten Schälguts 9 ebenso weniger als zwölf, beispielsweise sechs, oder mehr als zwölf Schneideinheiten 30 aufweisen.

Zwei benachbarten, nur durch eine Schneideinheit 30 getrennte Transporteinheiten 1 weisen in Transportrichtung T einen Abstand A zueinander auf, der so bemessen ist, dass das langgestreckte Schälgut 9 beim Verlassen der in Transportrichtung hinteren Transporteinheit 1 bereits in der in Transportrichtung T gesehenen vorderen Transporteinheit 1 gehalten ist. Indem der Abstand A auf diese Weise bemessen ist, kann auf zusätzliche Haltemittel verzichtet werden, die das langgestreckte Schälgut 9 im Bereich der Schneideinheit 30 halten.

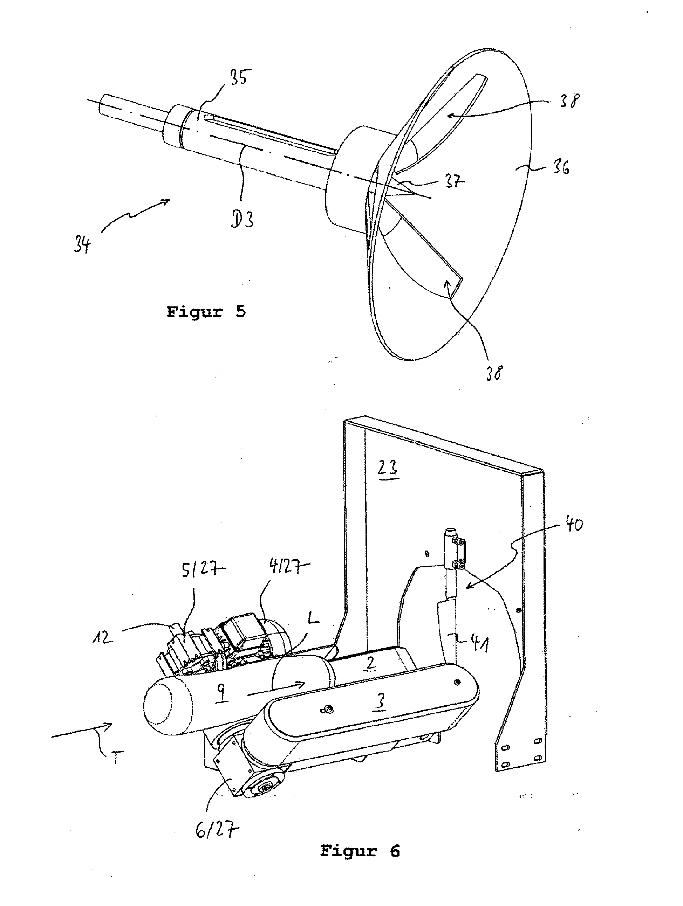

Der Schälvorrichtung 33 kann hinter einer in Transportrichtung T hinteren, ersten Transporteinheit 1.1 eine Anspitzvorrichtung 34 gemäß Figur 5 zugeordnet sein. Die Anspitzvorrichtung 34 weist hierbei einen Schaft 35, einen Schneidkegel 36 und einen Fixierdorn 37 auf. In dem Schneidkegel 36 sind zwei im Wesentlichen entlang einer Mantellinie des Schneidkegels 36 orientierte Schneiden 38 eingebracht. Durch das in Längsrichtung L des langgestreckten Schälguts 9 vorgenommene Aufsetzen des Fixierdorns 37 auf kuppelförmige Endabschnitte 39 des langgestreckten Schälguts 9 und das anschließende Rotieren der Anspitzvorrichtung 34 um eine zu der Längsrichtung L des langgestreckten Schälguts 9 im Wesentlichen parallele, durch den Schaft 35 verlaufende Drehachse D3 der Anspitzvorrichtung 35 werden die Endabschnitte 39 geschält. Nach dem Schälen der kuppelförmigen Endbereiche 39 des langgestreckten Schälguts 9 wird die Anspitzvorrichtung 34 außer Eingriff gebracht. Das langgestreckte Schälgut 9 wird in Transportrichtung T durch die Schälvorrichtung 33 transportiert und in den insgesamt zwölf Schneideinheiten 30 an dessen Umfang in Längsrichtung L geschält.

Beim Eintritt in eine in Transportrichtung T gesehen vordere, letzte Transporteinheit 1.13 ist das langgestreckte Schälgut 9 vollständig geschält. Vor dem Verlassen der Schälvorrichtung 33 wird das langgestreckte Schälgut 9 durch eine Teilungsvorrichtung 40 geteilt. Die Teilungsvorrichtung 40 weist eine vertikal orientierte, in der Symmetrieebene S der Förderrinne 8 verlaufende und im Wesentlichen senkrecht zur Transportrichtung T orientierte Schneide 41 auf. Beim Verlassen der Schälvorrichtung 33 liegt das langgestreckte Schälgut 9 vollständig geschält und in geteilter Form vor.

Nach einer alternativen, nicht dargestellten Ausführungsform kann die Schneideinheit 30 eine Mehrzahl von Messereinheiten 31 und/oder eine Mehrzahl von nicht zwingend parallel zueinander orientierten Messern aufweisen. Ebenso kann die Schneideinheit 30 einen Wasser- oder Druckluftanschluss zur Reinigung der Messer aufweisen.

Nach einer weiteren Ausführungsform kann jedem Transportmittel 1, welches ein endloses, umlaufendes Transportband aufweist, ein separater Elektromotor 4, 15 zugeordnet sein. In diesem Fall kann auf die Übertragung der Antriebsbewegung von dem ersten Transportmittel 2 auf das zweite Transportmittel 3 mit Hilfe des zweiten Winkelgetriebes 6 verzichtet werden. Die einzelnen Elektromotoren 4, 15 können hierbei steuerungstechnisch synchronisiert sein.

Alternativ kann auf das Synchronisieren der Förderbänder verzichtet werden und stattdessen ein Freilauf vorgesehen werden, der einer Beschädigung des langgestreckten Schälguts 9 durch unterschiedliche Geschwindigkeiten der Förderbänder entgegenwirkt.

Nach einer weiteren alternativen Ausführungsform können einzelne Transportmittel statt des Transportbandes Gleitflächen mit einer glatten Oberfläche aufweisen, die beispielsweise aus einem Edelstahlblech besteht. In diesem Fall kann das langgestreckte Schälgut 9 mit einem einzigen, ein Transportband aufweisenden Transportmittel gefördert werden und gleiten hierbei entlang der Edelstahlbleche. Die Edelstahlbleche können beispielsweise Teil des ersten Transportmittels 2 und des zweiten Transportmittels 3 sein. In diesem Fall ist lediglich das Transportmittel 14 des Niederhalters 7 als ein endloses, umlaufendes Transportband ausgebildet, über das das langgestreckte Schälgut in der aus Edelstahlblechen gebildeten Förderrinne 9 transportiert wird.

## Patentansprüche

1. Transporteinheit zum Transportieren von langgestrecktem Schälgut (9), insbesondere Gurken, mit einer Mehrzahl von Transportmitteln (2, 3, 7) zur Führung des langgestreckten Schälguts (9) in eine vorgegebene Transportrichtung (T) und mit einer Antriebseinrichtung zum Bewegen von wenigstens einem Transportmittel (2, 3, 7), wobei mindestens ein erstes Transportmittel (2) und ein zweites Transportmittels (3) im Querschnitt V-förmig zueinander angestellt orientiert sind zur Bildung einer in vertikaler Richtung nach oben offenen und sich in Transportrichtung (T) erstreckenden Förderrinne (8), entlang derer das langgestreckte Schälgut (9) angeordnet ist, wobei der Förderrinne (8) ein Niederhalter (7) zugeordnet ist derart, dass das langgestreckte Schälgut (9) entlang der Förderrinne (8) förderbar gehalten ist, **dadurch gekennzeichnet, dass** der Niederhalter (7) über einen Schwenkarm (20) schwimmend in Bezug zu den V-förmig zueinander angestellten Transportmitteln (2, 3) gelagert ist,
- wobei ein erster Endabschnitt (21) des Schwenkarms (20) um eine senkrecht zu der Transportrichtung (T) orientierte, horizontale erste Drehachse (D1) schwenkbar mit dem Niederhalter (7) verbunden ist, und
- wobei ein zweiter Endabschnitt (22) des Schwenkarms (20) um eine zu der ersten Drehachse (D1) parallele zweite Drehachse (D2) drehbar mit einem ortsfesten Träger (23) verbunden ist;
und dass der Niederhalter (7) ein sich in Transportrichtung (T) erstreckendes Transportmittel (14) aufweist, wobei das langgestreckte Schälgut (9) während des Transportes mit einer Längskontur desselben an dem Transportmittel (14) des Niederhalters anliegt, dass wenigstens ein Transportmittel (2, 3, 14) ein endloses, umlaufendes Transportband aufweist und dass die Antriebseinrichtung (27) einen Motor (4) zum Antrieb eines ersten Transportmittels (2) der V-förmig zueinander angestellten Transportmittel (2, 3) und/oder einen Motor zum Antrieb eines zweiten Transportmittels (3) der V-förmig zueinander angestellten Transportmittel (2, 3) und/oder einen Motor (15) zum Antrieb des Transportmittel (14) des Niederhalters (7) aufweist.

2. Transporteinheit nach Anspruch 1, **dadurch gekennzeichnet, dass** die V-förmig zueinander angestellten Transportmittel (2, 3) einen Anstellwinkel (α) einschließen, der in einem Winkelbereich von 40° bis 160° liegt.

3. Transporteinheit nach einem der Ansprüche 1 bis 2, **dadurch gekennzeichnet, dass** der Niederhalter (7) durch sein Eigengewicht und/oder durch ein Anpressmittel gegen das langgestreckte Schälgut (9) angepresst ist.

4. Transporteinheit nach einem der Ansprüche 1 bis 3, **dadurch gekennzeichnet, dass** die Antriebseinrichtung (27) ein Winkelgetriebe (5) aufweist zur Übertragung einer Antriebsbewegung von dem einen Motor aufweisenden ersten Transportmittel (2) der V-förmig zueinander angestellten Transportmittel (2, 3) auf das zweite Transportmittel (3) der V-förmig zueinander angestellten Transportmittel (2, 3).

## Claims

1. A transport unit for transporting elongated peeled goods (9), in particular cucumbers, comprising a plurality of transport means (2, 3, 7) for guiding the elongated peeled goods (9) in a predefined direction of transport (T) and comprising a drive device for moving at least one transport means (2, 3, 7), wherein at least one first transport means (2) and one second transport means (3) are inclined relative to one another to form a V shape, as seen in cross-section, in order to form a conveyer channel (8) which is open at the top in the vertical direction and extends in the direction of transport (T) along which the elongated peeled goods (9) are arranged, wherein a hold-down element (7) is assigned to the conveyer channel (8), in such a manner that the elongated peeled goods (9) are retained such that they can be conveyed along the conveyer channel (8), **characterized in that** the hold-down element (7), by means of a pivoting arm (20), is supported so as to be suspended above the transport means (2, 3) which are inclined relative to one another to form a V shape,
- wherein a first end section (21) of the pivoting arm (20) is connected to the hold-down element (7) so as to be pivotable about a horizontal first axis of rotation (D1) which is aligned at right angles to the direction of transport (T),
and
- wherein a second end section (22) of the pivoting arm (20) is connected to a stationary carrier (23) so as to be rotatable about a second axis of rotation (D2) which is parallel to the first axis of rotation (D1);
and that the hold-down element (7) has a transport means (14) extending in the direction of transport (T), wherein a longitudinal contour of the elongated peeled goods (9) is in contact with the transport means (14) of the hold-down element during transport, that at least one transport means (2, 3, 14) has an endless, circulating transport belt, and that the drive device (27) has a motor (4) for driving a first transport means (2) of the transport means (2, 3) which are inclined relative to one another to form a V shape and/or a motor for driving a second transport means (3) of the transport means (2, 3) which are inclined relative to one another to form a V shape and/or a motor (15) for driving the transport means (14) of the hold-down element (7).

2. The transport unit according to claim 1, **characterized in that** the transport means (2, 3) which are inclined relative to one another to form a V shape include an angle of inclination (α) which is in an angular range of 40° to 160°.

3. The transport unit according to either of claims 1 to 2, **characterized in that** the hold-down element (7) is pressed against the elongated peeled goods (9) due to its own weight and/or by a pressing means.

4. The transport unit according to any one of claims 1 to 3, **characterized in that** the drive device (27) has an angular gear (5) for transmitting a drive movement from the motorized first transport means (2) of the transport means (2, 3) which are inclined relative to one another to form a V shape to the second transport means (3) of the transport means (2, 3) which are inclined relative to one another to form a V shape.

## Revendications

1. Unité de transport, destinée à transporter un produit à éplucher étendu en longueur (9), en particulier des concombres, laquelle comprend une pluralité de moyens de transport (2, 3, 7), qui sont destinés à conduire le produit à éplucher étendu en longueur (9) dans une direction de transport prédéterminée (T), et un dispositif d'entraînement pour le déplacement d'au moins un moyen de transport (2, 3, 7),
- sachant qu'au moins un premier moyen de transport (2) et un deuxième moyen de transport (3) sont disposés l'un par rapport à l'autre en coupe transversale en forme de V, afin de former une rigole de transport (B), qui est ouverte vers le haut dans la direction verticale, s'étend dans la direction de transport (T) et le long de laquelle le produit à éplucher étendu en longueur (9) est disposé, sachant qu'un dispositif de maintien en position basse (7) est associé à la rigole de transport (B) de telle manière que le produit à éplucher étendu en longueur (9) soit maintenu, transportable, le long de la rigole de transport (B),
**caractérisée en ce que**, par l'intermédiaire d'un bras de pivotement (20), le dispositif de maintien en position basse (7) est monté flottant par rapport aux moyens de transport (2, 3) disposés en forme de V l'un par rapport à l'autre,
- sachant qu'une première section finale (21) du bras de pivotement (20) est reliée, à pivotement autour d'un premier axe de rotation horizontal (D1) orienté verticalement par rapport à la direction de transport (T), au dispositif de maintien en position basse (7),
et
- sachant qu'une deuxième section finale (22) du bras de pivotement (20) est reliée, à pivotement autour d'un deuxième axe de rotation (D2) parallèle au premier axe de rotation horizontal (D1), à un support fixe (23), et que le dispositif de maintien en position basse (7) présente un moyen de transport (14) qui s'étend dans la direction de transport (T),
- sachant que le produit à éplucher étendu en longueur (9) porte, pendant le transport, contre le moyen de transport (14) du dispositif de maintien en position basse (7) avec un contour longitudinal de celui-ci, qu'au moins l'un des moyens de transport (2, 3, 14) présente une bande de transport sans fin, en rotation et que le dispositif d'entraînement (27) présente un moteur (4) pour l'entraînement d'un premier (2) des moyens de transport disposés en forme de V l'un par rapport à l'autre (2, 3) et / ou un moteur pour l'entraînement d'un deuxième (3) des moyens de transport disposés en forme de V l'un par rapport à l'autre (2, 3) et / ou un moteur (15) pour l'entraînement des moyens de transport (14) du dispositif de maintien en position basse (7).

2. Unité de transport selon la revendication 1, **caractérisé en ce que** les moyens de transport disposés en forme de V l'un par rapport à l'autre (2, 3) forment un angle d'incidence qui est situé dans une plage de 40 ° à 160 °.

3. Unité de transport selon l'une des revendications 1 à 2, **caractérisée en ce que** le dispositif de maintien en position basse (7) est pressé par son propre poids et / ou par un moyen de pression contre le produit à éplucher étendu en longueur (9).

4. Unité de transport selon l'une des revendications 1 à 3, **caractérisée en ce que** le dispositif d'entraînement (27) présente un engrenage angulaire (5) pour la transmission d'un mouvement d'entraînement du premier (2) des moyens de transport disposés en forme de V l'un par rapport à l'autre (2, 3), doté d'un moteur, au deuxième (3) des moyens de transport disposés en forme de V l'un par rapport à l'autre (2, 3).
